# EUROPÄISCHE PATENTSCHRIFT

(11) **EP 0 592 645 B1**
(45) Veröffentlichungstag und Bekanntmachung des Hinweises auf die Patenterteilung: **10.07.1996**
(21) Anmeldenummer: 93909873.7
(22) Anmeldetag: 30.04.1993
(51) Int. Cl.: B44C 3/08, B29C 44/56, B29C 59/02, B44B 5/00

(54) **VERFAHREN UND VORRICHTUNG ZUR HERSTELLUNG VON DEKORARTIKELN AUS POLYSTYROL-SCHAUMSTOFF**
PROCESS AND DEVICE FOR PRODUCING DECORATIVE ARTICLES MADE OF POLYSTYRENE FOAM
PROCEDE ET DISPOSITIF DE FABRICATION D'ARTICLES DE DECORATION EN POLYSTYRENE EXPANSE

(30) Priorität: 02.05.1992 DE 4214698; 03.08.1992 DE 4226387; 10.10.1992 DE 4234206
(43) Veröffentlichungstag der Anmeldung: 20.04.1994
(73) Patentinhaber: INFRA-FOLIENKABEL GmbH, D-32108 Bad Salzuflen (DE)
(72) Erfinder: FRIEMUTH, Bernd, D-4902 Bad Salzuflen (DE)
(74) Vertreter: Hoffmeister, Helmut, Dr. Dipl.-Phys.
(86) Internationale Anmeldenummer: EP9301054
(87) Internationale Veröffentlichungsnummer: WO9322149

(56) Entgegenhaltungen:
- EP-A- 0 229 008
- DE-A- 3 019 528
- GB-A- 1 190 318
- GB-A- 1 477 506
- US-A- 3 608 143
- US-A- 4 201 818
- US-A- 4 353 949
- US-A- 4 493 748

## Beschreibung

Die Erfindung betrifft ein Verfahren und eine Vorrichtung zur Herstellung von Dekorartikeln, nämlich Platten und Profilleisten, aus Polystyrol-Schaumkunststoff, mit folgenden Verfahrensschritten:
- Herstellung eines Blocks aus geblähten, untereinander haftenden Polystyrol-Perlen mit Hilfe eines Treibmittels und bei einer Temperatur oberhalb von 100° C in einer Form,
- nach dem Abkühlen des Blocks Schneiden von einzelnen leisten- oder plattenförmigen Rohlingen mit sichtbarem Anschnitt der sich an der Schnittfläche des Rohlings befindenden Polystyrol-Perlen,
- Dekorieren einer Schnittfläche durch Verformen unter Druck- und Wärmeeinwirkung.

Dekorplatten aus Schaumkunststoff, etwa des Formates 75 x 75 cm und mit einer Dicke von 5 - 20 mm, werden schon seit längerer Zeit zur Verschönerung und zur Schalldämmung in Innenräume eingebaut. Sie werden auf einer Unterlage mit lösungsmittelfreien Klebern verklebt. Dabei werden erfahrungsgemäß von den Abnehmern solche Dekorplatten vorgezogen, die zu 100 % aus Polystyrol-Schaumkunststoff bestehen und deren Sichtfläche mit einem reliefartigen Dekor versehen ist. Derartige Schaumkunststoffplatten können in Einzelformen aufgeschäumt werden. Sie besitzen entsprechend diesem Herstellungsverfahren eine glatte un dnicht mehr leicht als Schaumkunststoff erkennbare, schutzunempfindliche Oberfläche.

Die Herstellung von Dekorplatten in Polystyrol-Einzelformen ist jedoch sehr aufwendig. Jede einzelne Platte wird dadurch hergestellt, daß in einer Form ein Blähvorgang erfolgt. Polystyrol-Perlen sind mit einem Treibmittel, beispielsweise Pentan, versehen. In der Blähform wird bei einer Temperatur von etwa 100° C das Polystyrol weich genug, so daß es durch das verdampfende Pentan aufgebläht werden kann. Nach dem Blähvorgang müssen die Metallformen wieder abgekühlt werden, so daß ausgeformt werden kann. Dieses bekannte Verfahren ergibt daher ästhetisch befriedigende Dekorplatten, ist jedoch in der Anwendung sehr energieaufwendig und damit teuer. Außerdem erfordern die Schäumformmaschinen hohe betriebliche Investitionen.

Weiterhin ist bekannt, zunächst große, mehrere Kubikmeter große Blöcke zu schäumen und aus diesen Blöcken dann einzelne, platten- oder profilförmige Rohlinge thermisch zu schneiden. Die sich ergebenden Rohlinge haben jedoch einen sichtbaren Anschnitt der Polystyrol-Perlen, wenn diese auch miteinander verbunden sind. Die sich beim Schneiden ergebende Oberfläche bildet die vorhandene Zellstruktur in unerwünschter Weise genau ab, denn es entsteht um jede Perle ein sichtbarer, leicht erhöhter Rand, so daß die Oberfläche der Platte uneben, rauh und schmutzempfindlich ist.

Andere Schneidverfahren auf mechanischer Basis, z. B. mit umlaufenden oder rotierenden Messern, sind bekannt. Diese Verfahren erfordern jedoch wiederum höhere Investitionskosten und einen höheren Zeitaufwand für das Schneiden selbst.

Es ist weiterhin bekannt, Plattenrohlinge mit Hilfe von erhitzten Walzen, durch die die Plattenrohlinge hindurchfahren, mit einer Reliefstruktur zu überfahren, wobei sich durch die Negativformen der Walzen ein entsprechendes Dekor auf der Oberfläche ausbildet. Es zeigt sich aber, daß bei der Verformung mit Walzen sehr viele kleine rauhe Krater entstehen, die sich bei der Einwirkung von Hitze auf das einzelne angeschnittene Schaumstoff-Perlchen bilden. In der Mitte fällt die angeschnittene Perle in der Dekoroberfläche zusammen, während die kreisrunden Randzonen weniger hitzeempfindlich sind und erhabene Ränder bilden. Die mit Walzen verformten Plattenrohlinge sind auch üblicherweise nur stellenweise hitzegeprägt und lassen Teile der angeschnittenen Schaumstoffoberfläche unverändert stehen. Derartige Platten sind aufgrund der erkennbaren Zellstruktur als Schaumstoffplatten sofort erkennbar; sie sind bei den Abnehmern daher weniger gefragt. Ähnliches gilt für verformte Profilrohlinge.

Es stellt sich damit die Aufgabe, ein Verfahren zur Herstellung von Dekorartikeln aus Polystyrol-Schaumkunststoff anzugeben, das Gegenstände ergibt, die den aus Einzelformen stammenden Gegenständen in der Oberflächenqualität sehr nahe kommen und von den meisten Abnehmern von diesen nicht zu unterscheiden sein werden, wobei das Verfahren wesentlich weniger kosten- und energieaufwendig zu betreiben sein soll als das Verfahren, das mit Einzelformen arbeitet.

Diese Aufgabe wird bei einem Verfahren gelöst, bei dem das Dekorieren der Schnittfläche dadurch geschieht, daß die geschnittenen Schaumstoffrohlinge auf einer ihrer Seiten mit einem auf wenigstens 125° C erwärmten, mit einem den Dekor hervorrufenden Relief versehenen Flachstempel, bzw. bei Profilleisten mittels eines den Konturen des Leistenprofiles folgenden Stempel, kurzzeitig vollflächig, d. h. die gesamte sich dem Stempel darbietende Seite des Rohlings, gegebenenfalls unter Auslassung von Randbereichen, verformend, gepreßt werden, wobei die Relief-Fläche des Stempels mit einer haftungsverhindernden Beschichtung, vorzugsweise aus PTFE, ausgestattet ist und/oder vor dem Pressen mit einem Trennmittel versehen wird.

Gemäß Verfahren wird mit einem flachen, erwärmten Stempel kurzzeitig vollflächig (gegebenenfalls unter Auslassung von rahmenartigen Rändern und unter Anwendung konturierter Profilseiten-Stempel) ein Relief auf den Rohling gepreßt. Nach dem Abheben des Stempels hat sich die Oberfläche des Rohlings derart verändert, daß die einzelnen angeschnittenen Polystyrol-Perlen miteinander verschmolzen sind und eine verdichtete Masse an der Plattenoberfläche bilden. Diesen Effekt bezeichnet der Fachmann auch als Bügeln oder Plätten, da sich die Poren des Schaumstoffs im wesentlichen schließen. Es bildet sich optisch eine an der Oberfläche geschlossene Fläche mit Dekor aus, wobei die beim Plattenrohling zunächst vorhandene Zellstruktur oberflächlich verschmilzt und sich homogenisiert. Für den Nicht-Fachmann ist ein Unterschied zu den aus Einzelformen stammenden Dekorartikeln nicht mehr zu erkennen.

Vorzugsweise beim Einsatz des Verfahrens gewählte Parameter sind in den Unteransprüchen beschrieben.

Es zeigt sich, daß eine erfindungsgemäß hergestellte Dekorplatte, insbesondere bei relativ dünnen Dekorplatten, aufgrund der vollflächigen Verformung und der dabei erhaltenen Verschmelzungshaut eine Schüsselung in Richtung der verformten Dekorseite aufweisen kann. Derartige "geschüsselte" Platten sind mit handelsüblichen Schaumstoff-Klebern nur sehr schwer zu verarbeiten, da sich die Ecken der Dekorplatten immer wieder aus dem noch feuchten Kleberbett herausziehen.

Um diesen Effekt der Schüsselung zu vermeiden und eine ebene, spannungsfreie Dekorplatte zu erhalten, wird nach dem Formen der (dekorierten) Vorderseite auch die Rückseite der Platte mit einem flachen oder reliefierten Preßstempel vollflächig gepreßt, wobei vorzugsweise dieselben Verfahrensparameter eingehalten werden, die auch bei der Verformung der Vorderfläche bereits gewählt worden sind. Es ist auch möglich, einen glatten, aber leicht konvex geformten Preßstempel zu verwenden, so daß sich, falls erwünscht, eine leichte Schüsselung in Richtung der Rückseite ergibt. Es zeigt sich, daß nach Verformung der Rückseite sich eine spannungsfreie, gerade Platte ergibt.

Anstelle des Formenverfahrens ist es auch möglich, nach dem Formen der (dekorierten) Vorderseite die Dekorplatte unter Andruck durch ein Walzenpaar laufen zu lassen, wobei auf der dekorierten Fläche Dehnungsfalten, Risse und/oder Kerben entstehen, die zu einer Entspannung der dekorierten Fläche führen.

Dabei zeigt sich das Phänomen, daß die Verschmelzungshaut der Dekoroberfläche zwar von vielen Dehnungsfalten, Rissen und Kerben verletzt ist, diese sich jedoch durch die dem Schaumkunststoff eigenen Rückstellkräfte wieder schließen. Durch die kurzfristige Überdehnung wird zwar die Verschmelzungshaut verletzt, erreicht wird jedoch eine Dekorplatte, die biegsam und eben ist und eine flexible, federnde Oberfläche erhalten hat.

Als Trennmittel werden vorzugsweise flüssige Stoffe verwendet, die, wie bekannt, die Adhäsionskräfte zwischen der Stempeloberfläche und der Polystyrol-Schaumstofffläche verringern. Es eignen sich dazu Silikone in Form von Ölen, Ölemulsionen in Wasser, Metallseifen oder Fluorkohlenstoffe. Erfindungsgemäß ist das Trennmittel so gewählt, daß eine Hitzebeständigkeit entsprechend der gewählten Parameter besteht und keine Änderung des Brandverhaltens durch die Anwendung des Trennmittels auftritt.

Vorzugsweise wird ein flüssiges Trennmittel durch Sprühen auf die ungepreßte Fläche des Rohlings aufgebracht. Anschließend überträgt sich ein Teil des Trennmittels auf die Preßstempelfläche, so daß ohne weiteres Aufbringen eines Trennmittels beispielsweise noch weitere 5 - 12 Plattenrohlinge gepreßt werden können.

Eine weitere interessante Variante des Verfahrens stellt die Möglichkeit dar, die zu pressenden Flächen des Rohlings vor dem Preßvorgang mit einem pulver-, plättchen- oder granulatförmigen Material sternhimmelartig zu bestreuen und anschließend das gekörnte Material mit der Oberfläche durch den Preßstempel zu verbinden, wobei eine leichte oberflächliche Verschmelzung erfolgen kann. Derartige Materialien können beispielsweise sogenannte Glitter-Plättchen sein, die mit willkürlichen Kippwinkeln über die Oberfläche verteilt sind, so daß sich ein ästhetisch interessanter Glitzereffekt ergibt.

Eine Vorrichtung zur Durchführung des Verfahrens zur Herstellung von Dekorplatten bzw. von Dekorprofilen ist gekennzeichnet durch die Merkmale der Ansprüche 12 bzw. 13.

Vorzugsweise werden die Rohlinge auf dem Stempeltisch mittels Vakuumbohrungen, die in einer Auflageplatte des Stempeltisches eingebracht sind, fixierbar, in dem ein Vakuum die Rohlinge anzieht. Diese Art der Fixierung ist vorteilhaft, da insbesondere bei plattenförmigen Rohlingen eine Vergleichmäßigung des Andruckes über die Fläche erfolgt, so daß auch der Stempeldruck sich gleichmäßig verteilt und keine Eingriffe in die erhitzte Dekorfläche erfordert.

Das Ende des Stempeltisches wird vorzugsweise durch einen vertikal aushebbaren Anschlag definiert, der es ermöglicht, die Rohlinge mit hoher Geschwindigkeit einschuschieben und exakt zu plazieren.

Die Stempelplatte besteht vorzugsweise aus einer Heizplatte und der durch diese aufheizbare Stempel-Patrize, wobei Thermoelemente, die dazu dienen, die Temperatur in der Stempel-Patrize zu messen, in die der Heizplatte zugewandte Oberseite der Stempel-Patrizenplatte eingelassen sind.

Schließlich sei noch darauf hingewiesen, daß mit Vorteil das eingangs genannte Verfahren auch zur Herstellung von Untertapeten aus Polystyrol-Schaumstoff dienen kann, bei dem eine geringe Plattendicke (ca. 0,5 cm) erforderlich ist, indem eine glatte (nicht-reliefierte) Stempelfläche verwendet wird.

Die Erfindung bezieht sich schließlich auch auf Platten, die nach einem der vorhergehenden Ansprüche bzw. Merkmale gefertigt wurden. Mit Vorteil läßt sich das Verfahren auf relativ dünne Platten anwenden, d.h. auf solche, die nach dem Preßvorgang nur noch etwa 3 - 19 mm dick sind. Der Anmelder hat Versuche durchgeführt. Diese haben ergeben, daß relativ dicke Platten, beispielsweise 40 mm dicke Platten, leicht zu fertigen sind, da eine solche massive Platte steif ist und die Möglichkeit bietet, beim Hochfahren des Stempels die Platte festzuhalten, ohne daß diese zerstört wird. Eine solche Möglichkeit besteht jedoch bei der Fertigung dünner Platten nicht, die jedoch wegen Materialersparnis und Anwendungsmöglichkeit besonders erwünscht sind.

Bei Platten unter 19 mm liegen beispielsweise nur 2 Schaumstoffkügelchen übereinander, so daß diese Platte sehr labil und zerbrechlich ist. Bei einer vollflächigen Hitzeprägung, die von der Plattendicke etwa 2 - 3 mm wegnimmt, ist daher von Vorteil, wenn mit Hilfe der Vakuum-Fixierung sich der Prägestempel ohne Zerstörung der Platte von dieser lösen kann.

Ohne eine solche Vakkum-Fixierung schmilzt die heiße Prägefläche des Stempels beim Hochfahren gerade aus stärker strukturierten Platten Teile heraus und zerstört damit die gesamte Platte im Bruchteil einer Sekunde. Auch das Niederhalten der Platte, beispielsweise mit Metallschienen um den ganzen Plattenrand herum, reicht nicht aus, um die Platte zu fixieren, da sich die Plattenmitte einer dünnen, biegsamen Platte nicht schnell genug vom Prägestempel löst und damit mittig aufbeult und durch Verschmelzen zerstört wird.

Demnach ist gerade für dünne Platten und für die Anfertigung von Untertapeten das Fixieren mit Vakuum-Ansauglöchern, die sich zum Plattenmittelpunkt hin verdichten, wichtig.

Anhand der Zeichnung und eines Beispieles werden das Verfahren und die Vorrichtung erläutert. Die Figuren der Zeichnung zeigen:
- Figur 1: schematisch Stempel und Dekorplatte;
- Figur 2: einen Schnitt durch die Stempelplatte im Bereich eines Thermoelementes;
- Figur 3: schematisch die zur Durchführung des Verfahrens vorgesehene Anordnung von Aggregaten;
- Figur 4: eine Vorrichtung zur Herstellung von Dekor-Profilen.

### Beispiel:

Wie an sich bekannt, wird in einer großen Form ein mehrere Kubikmeter großer Block aus geblähtem, untereinander haftenen Polystyrol-Perlen mit Hilfe eines Treibmittels und bei einer Temperatur oberhalb 100° C hergestellt. Bei dieser Temperatur wird das Polystyrol dieser Perlen weich genug, so daß es durch das verdampfende Treibmittel, vorzugsweise Pentan, aufgebläht werdenkann. Nach dem Aufblähen und dem Abkühlen der Form wird der Block entnommen. Nach dem Abkühlen werden aus dem Block einzelne plattenförmige Schaumstoffrohlinge 2 geringer Dicke mit sichtbarem Anschnitt der sich an der Schnittflache 3 des Rohlings befindenden Polystyrol-Perlen thermisch geschnitten. Die Dicke der Rohlinge entspricht dabei im wesentlichen der späteren Dicke der Dekorplatten.

Die geschnittenen Schaumstoffrohlinge 2 werden auf einer Flachseite mit einem vorzugsweise rechteckigen oder quadratischen, auf wenigstens 125° C erwärmten Flachstempel 1 gepreßt. Die Pressung erfolgt vollflächig, d. h. die gesamte Oberfläche des Rohlings wird verformt, wobei ein Rand 4, der quasi einen Rahmen bildet, am Außenrand ungeformt verbleibt. Auf einen solchen Rand 4 kann auch verzichtet werden. Vor dem Pressen wird vorzugsweise die Relieffläche des Flachstempels, der mit einer haftungsverhindernden Beschichtung, vorzugsweise aus PTFE, versehen ist, mit einem üblichen Trennmittel, beispielsweise einem Silikonöl, versehen. Der Andruck des Flachstempels ist relativ niedrig. Er liegt zwischen 1000 und 2000 N/m² (Pa). Die Preßdauer liegt zwischen 0,3 und 10 s, vorzugsweise bei 0,8 - 1,5 s. Die Temperatur der Flachstempel-Oberfläche in Kontakt mit dem Plattenrohling liegt zwischen 125° und 200° C, vorzugsweise zwischen 160° und 175° C. Die vorgenannten Parameter können in Grenzen variiert werden; eine niedrigere Preßstempel-Temperatur erfordert eine längere Preßzeit und umgekehrt.

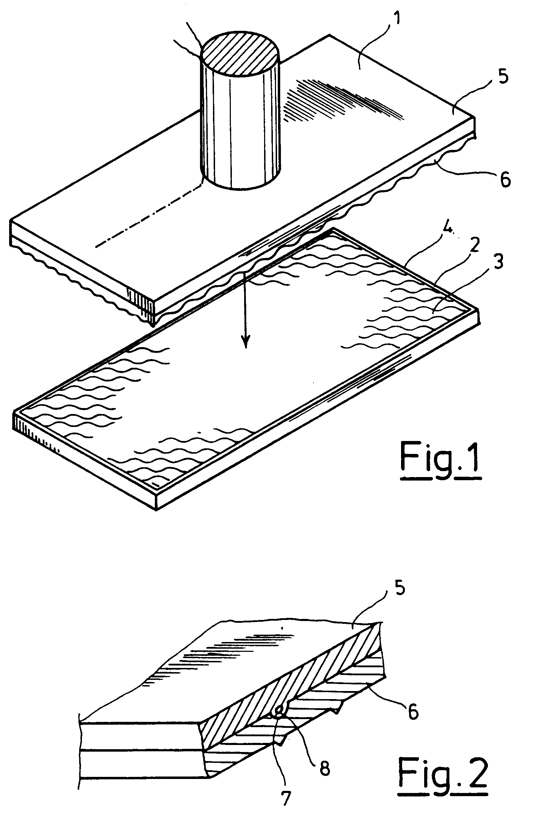

Die Figuren 1 und 2 zeigen, daß der Flachstempel 1 aus zwei übereinanderliegenden Teilen besteht, nämlich aus einer Heizplatte 5 und einer Patrizenplatte 6, die im Anschnitt auch in Figur 2 dargestellt sind. In Vertiefungen 7 der Patrizenplatte 6 sind Thermoelemente 8 eingelassen, die der Heizplatte zugewandt sind. Die Heizplatte ist mit mäanderförmigen elektrischen Heizdrähten belegt und kann über einen Regelkreis, dessen Ist-Werte durch die von den Thermoelementen 8 stammenden Signale sind, gesteuert werden.

Die Eindringtiefe des Flachstempels wird vorzugsweise durch einen Anschlag begrenzt, so daß eine gewünschte Dicke der hergestellten Dekorplatten auf jeden Fall erhalten bleibt.

Erweist sich, daß nach dem Formen der dekorierten Vorderseite eine Schüsselung eintritt, so kann auch die Rückseite der Platte mit einem flachen oder reliefierten Preßstempel vollflächig gepreßt werden, wobei im wesentlichen dieselben Parameter eingehalten werden, die auch bei der Pressung der Vorderseite bereits gewählt worden sind.

Alternativ kann zur Vermeidung der Schüsselung die Platte auch durch ein Walzenpaar unter leichtem Andruck geführt werden, so daß sich Dehnungsfalten, Risse und Kerben ergeben, die jedoch durch die dem Schaumkunststoff eigenen Rückstellkräfte wieder geschlossen werden, sobald die leichte Verformung aufgehoben wird.

Alternativ kann weiterhin der Rohling erfindungsgemäß auf beiden Hauptflächen gleichzeitig bei vorzugsweise gleichen Parametern und Dekoren geprägt werden, wobei die beiden Prägestempel exakt gleichzeitig die nur am Rand gehaltenen Rohlingen prägen und entformen. Dann kann auf den Einsatz von Trennmitteln verzichtet werden, da sich Anhaftkräfte aufheben, ebenso die Kräfte, die die beidseitig dekorierte Platte gerade halten.

In der Figur ist eine fertige Dekorplatte 2 mit einer dekorierten Oberfläche gezeigt, wobei im seitlichen Anschnitt sich deutlich die Strukturen der Polystyrol-Perlen zeigen, die jedoch auf der Oberfläche verschmolzen sind.

Die gesamte Dekorfläche ist leicht verformt, wobei die einzelnen, angeschnittenen und miteinander verbundenen Polystyrol-Perlen der Dekorfläche durch die Oberseite der Preßstempel verschmolzen sind. Der sichtbare Rand der Umgebungshaut der angeschnittenen Schaumstoffperlen und der sichtbare Kern der angeschnittenen Polystyrol-Perlen sind miteinander verschmolzen. Die Oberfläche ist entsprechend der Reliefierung des Preßstempels bleibend verformt, ohne daß die in ihrer Struktur weniger hitzeempfindlichen Ränder der angeschnittenen Polystyrol-Perlen erhaben stehenbleiben. Es ergibt sich eine Verdichtung der Dekoroberfläche mit einer geschlossenporigen Verschmelzungshaut.

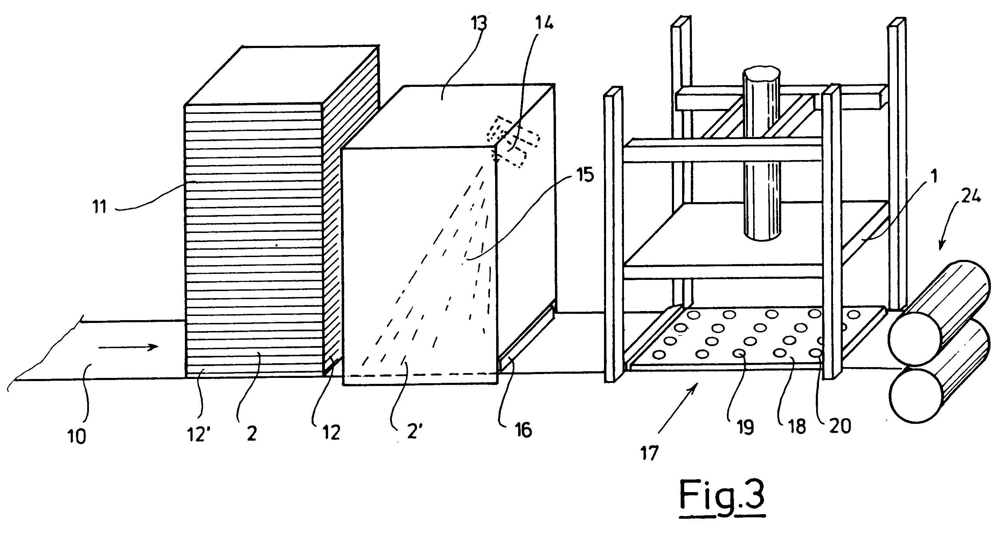

In Figur 3 ist schematisch die Anordnung einzelner Aggregate dargestellt, die der Rohling 2 durchläuft.

Ein Rohlingsstapelhalter 11, der an seiner Unterseite Öffnungen 12 bzw. 12' enthält, kann mit einer Schiebeplatte 10 unterfahren werden, wobei ein Rohling 2 in die mit entsprechender Öffnung ausgestattete Sprühkammer 13 eingeführt wird. Der in Position 2' liegende Plattenrohling wird mit Hilfe eines Sprühkopfes 14 mit einem flüssigen Trennmittel 15 ausreichend besprüht. Nach dieser, nur wenige Sekunden dauernden Prozedur wird der Sprühkopf 14 abgestellt und die Schiebeplatte 10 schiebt die nächste Platte 2 ein, wobei diese gleichzeitig die in Position 2' liegende Platte weiterbefördert in den Bereich vor die Preßvorrichtung 17. Die besprühte Platte erreicht dann mit dem nächsten Hub der Schiebeplatte 10 den Stempeltisch 18, auf dem sie bis zum Anschlag 20 durchgeschoben wird. Über Vakuumöffnungen 19 wird von unterhalb der Platte ein Vakuum angelegt, das den Plattenrohling fest auf die Oberfläche des Stempeltisches zieht. Anschließend fährt der heiße Stempel 1 nach unten und drückt das Relief auf, wie bereits beschrieben worden ist. Mit dem nächsten Hub der Schiebeplatte 10 wird dann die Platte ausgestoßen. Es hat sich erwiesen, daß von der ersten, besprühten Stempelplatte genügend Trennmittel auf die Oberfläche des Stempels gelangt, so daß auch die nächsten 5 - 12 Plattenrohlinge noch ausreichend sich vom Stempel wieder abtrennen lassen, da die geringe Menge des Trennmittels, die vorhanden ist, die Adhäsion praktisch aufhebt.

Die Patrizenplatte kann in einfacher Weise ausgewechselt werden, ohne daß die gesamte Preßvorrichtung umgebaut werden muß. So ist es z. B. möglich, eine völlig flache Patrizenplatte anzubringen, mit der sehr dünne Plattenrohlinge den Zyklus durchlaufen können. Auf diese Weise gewinnt man sogenannte Untertapeten, die es ermöglichen, daß eine aufgeklebte Tapete in einfacher Weise wieder abgenommen wird. Hier entsteht eine verminderste Kleisterhaftung, und es wird ein Tapeten-Stripp-Effekt erzielt.

Auch ist es möglich, die Platten jeweils zu zweien (Paaren) in den Bereich der Preßvorrichtung einzuschieben. Als Material eignet sich beispielsweise Polystyrol 15, ein Polystyrol-Schaumstoff mit einer Dichte von nur 0,015. Dies stellt eine preiswerte Bauqualität dar, die durch das Verfahren erheblich aufgewertet wird.

Das Trennmittel hat einen Siedepunkt oberhalb von 105° C und eine lange Standzeit. Die Sprühzeit beträgt beispielsweise nur 1 s. Der Anschlag 20 kann nach oben und nach unten gefahren werden, so daß nach Beendigung des Stempelvorganges die Platte in einfacher Weise ausgestoßen werden kann.

An die Preßvorrichtung 17 schließt sich noch eine Walzenstation an, in der eine Rückstellspannung der Platten wieder aufgehoben wird. Hierdurch ergeben sich zwar kleine Risse und Brüche; diese sind jedoch so klein, daß sie mit bloßem Auge nicht sichtbar sind.

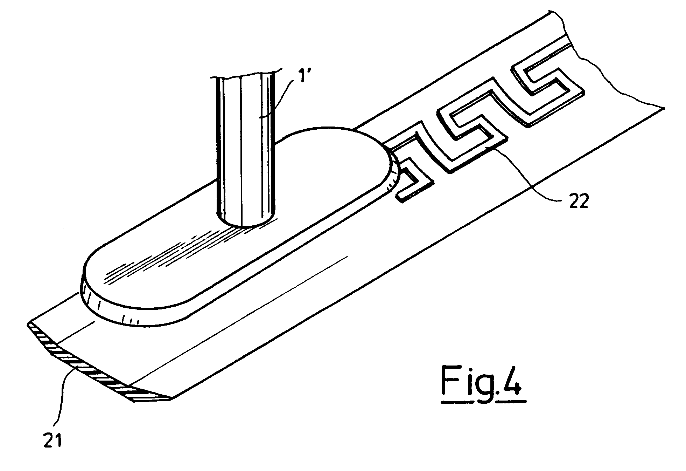

In Figur 4 ist die Anwendung des Verfahrens auf Polystyrol-Profilteile dargestellt. Hierbei wird ein bereits in einer vorgeformten Profilform, beispielsweise ein Profil 21 mit C-förmigen Querschnitt mit einem Stempel 1', der eine flache Unterseite hat, beaufschlagt, wobei sich die gekrümmte Fläche in die Waagerechte biegt und gleichzeitig die Reliefstruktur annimmt. Wird der Stempel wieder abgenommen, so schnellt die Profilform in die ursprüngliche Form praktisch vollständig zurück, hat jedoch die Oberflächenbeschaffenheit, die eine geschlossenporige Oberfläche erscheinen läßt, wie dies eingangs anhand der Polystyrol-Schaumstoffplatten beschrieben worden ist. Der sich ergebende Dekor ist mit 22 bezeichnet. Das Einbringen des Dekors 22 kann rapportartig geschehen. Es ist aber auch möglich, jeweils einstückig eine Leiste von 1 - 2 m Länge zu erstellen. Dabei können flache Stempelflächen als auch sich der Kontur des Profiles angepaßte Stempelflächen verwendet werden.

## Patentansprüche

1. Verfahren zur Herstellung von Dekorartikeln, nämlich Platten und Profilleisten, aus Polystyrol-Schaumkunststoff, mit folgenden Verfahrensschritten:
- Herstellung eines Blocks aus geblähten, untereinander haftenden Polystyrol-Perlen mit Hilfe eines Treibmittels und bei einer Temperatur oberhalb der Polystyrol-Erweichungstemperatur in einer Form,
- nach dem Abkühlen des Blocks Schneiden von einzelnen leisten- oder plattenförmigen Rohlingen mit sichtbarem Anschnitt der sich an der Schnittfläche des Rohlings befindenden Polystyrol-Perlen,
- Dekorieren einer Schnittfläche durch Verformen unter Druck- und Wärmeeinwirkung,
dadurch gekennzeichnet, daß
die geschnittenen Schaumstoffrohlinge auf einer ihrer Seiten mit einem auf wenigstens 125° C erwärmten, mit einem den Dekor hervorrufenden Relief versehenen Flachstempel (1), bei Profilleisten auch mittels eines den Konturen des Leistenprofils folgenden Stempel kurzzeitig vollflächig, d. h. die gesamte sich dem Stempel darbietende Seite des Rohlings, gegebenenfalls unter Auslassung von Randbereichen, verformend, gepreßt werden, wobei die Relief-Fläche des Stempels mit einer haftungsverhindernden Beschichtung, vorzugsweise aus PTFE, ausgestattet ist und/oder vor dem Pressen mit einem Trennmittel versehen wird.

2. Verfahren nach Anspruch 1, dadurch gekennzeichnet, daß der Andruck des Flachstempels zwischen 1000 und 2500 Pa liegt.

3. Verfahren nach einem der vorhergehenden Ansprüche, dadurch gekennzeichnet, daß die Preßdauer zwischen 0,3 und 10 Sekunden liegt.

4. Verfahren nach einem der vorhergehenden Ansprüche, dadurch gekennzeichnet, daß die Temperatur der Flachstempel-Oberfläche in Kontakt mit dem Plattenrohling zwischen 125° und 200° C liegt.

5. Verfahren nach einem der vorhergehenden Ansprüche, dadurch gekennzeichnet, daß die Eindringtiefe des Flachstempels durch einen Anschlag begrenzt wird.

6. Verfahren nach einem der vorhergehenden Ansprüche, dadurch gekennzeichnet, daß nach dem Formen der (dekorierten) Vorderseite auch die Rückseite der Profilleiste oder Platte mit einem flachen oder reliefierten Preßstempel vollflächig gepreßt wird, oder daß der Rohling auf zwei Hauptflächen gleichzeitig geprägt wird.

7. Verfahren nach einem der vorhergehenden Ansprüche, dadurch gekennzeichnet, daß nach dem Formen der (dekorierten) Vorderseite die Dekorplatte unter Andruck durch ein Walzenpaar läuft, wobei auf der dekorierten Fläche Dehnungsfalten, Risse und/oder Kerben entstehen, die zu einer Entspannung der dekorierten Fläche führen.

8. Verfahren nach einem der vorhergehenden Ansprüche, dadurch gekennzeichnet, daß als Material Polystyrol-Schaumstoff mit einer spezifischen Dichte von 0,015 - 0,020 verwendet wird.

9. Verfahren nach einem der vorhergehenden Ansprüche, dadurch gekennzeichnet, daß das Trennmittel durch Sprühen auf die (ungepreßte) Fläche des jeweils n-ten Plattenrohlings aufgebracht wird (n= 5 bis 12) und sich von dort auf die Reliefoberfläche des Stempels verteilt.

10. Verfahren nach einem der vorhergehenden Ansprüche, dadurch gekennzeichnet, daß die zu pressende Fläche des Plattenrohlings vor dem Preßvorgang mit einem pulver-, plättchen- oder granulatförmigen Material sternenhimmelartig bestreut wird.

11. Verfahren nach Anspruch 10, dadurch gekennzeichnet, daß das gestreute Material sich beim Preßvorgang mit dem Material der Plattenrohlingsoberfläche durch teilweises Verschmelzen verbindet.

12. Vorrichtung zur Durchführung des Verfahrens zur Herstellung von Dekorplatten aus plattenförmigen Rohlingen mit sichtbarem Anschnitt gemäß Anspruch 1, gekennzeichnet durch:
- einen Rohlingsstapelhalter (11), dem die plattenförmigen Rohlinge einzeln entnehmbar sind,
- einer Sprühkammer (13) mit einem auf die Rohlinge gerichteten Sprühkopf (14) für das Aufsprühen eines Trennmittels (15),
- einem Stempeltisch (18, auf dem wenigstens ein plattenförmiger Rohling plan fixiert auflegbar ist, und
- einem heizbaren Preßstempel (10), mit dem der auf dem Stempeltisch aufliegende Rohling gepreßt werden kann.

13. Vorrichtung zur Durchführung des Verfahrens zur Herstellung von Dekorprofilen aus profilierten Rohlingen mit sichtbarem Anschnitt gemäß Anspruch 1, gekennzeichnet durch
- einem Vorrat, dem die Profilteile entnehmbar sind,
- einer Sprühkammer mit einem auf die Rohlinge gerichteten Sprühkopf für das Aufsprühen eines Trennmittels,
- einem Stempeltisch, auf dem wenigstens ein profilförmiger Rohling fixiert werden kann;
- einem heizbaren Preßstempel, der eine konturierte oder plane Patrizenfläche besitzt.

14. Vorrichtung nach Anspruch 10 oder 11, dadurch gekennzeichnet, daß die Rohlinge auf dem Stempeltisch mittels Vakuum-Bohrungen, die in der Auflageplatte des Stempels eingebohrt sind, fixierbar ist.

15. Vorrichtung nach einem der Ansprüche 12 bis 14, dadurch gekennzeichnet, daß das Ende des Stempeltisches durch einen vertikal aushebbaren Anschlag (20) definierbar ist.

16. Vorrichtung nach einem der vorhergehenden Ansprüche 12 bis 15, dadurch gekennzeichnet, daß die Stempelplatte aus einer Heizplatte und einer durch diese aufheizbaren Stempel-Patrizenplatte besteht, und daß Thermoelemente (8) zur Messung der Temperatur in die der Heizplatte zugewandte Oberseite der Stempel-Patrizenplatte eingelassen sind.

17. Vorrichtung nach einem der vorhergehenden Ansprüche 12 bis 16, dadurch gekennzeichnet, daß ein Walzenpaar (24) der Preßvorrichtung (17) nachgeschaltet ist.

18. Platte, hergestellt nach einem der vorhergehenden Ansprüche.

19. Platte nach Anspruch 18, dadurch gekennzeichnet, daß diese nach dem Preßvorgang eine Dicke von 3 - 19 mm hat.

20. Profilleiste, hergestellt nach einem der vorhergehenden Ansprüche.

## Claims

1. A method of manufacturing decorative articles, i.e. panels and profiled strips, from polystyrene foamed plastic, the steps in the method being as follows:
- manufacturing a block of expanded polystyrene beads adhering to one another in a mould, using a foaming agent and at a temperature above the polystyrene softening temperature,
- after the block cools, cutting individual strips or panel-shaped blanks with a visible cut through the polystyrene beads on the cut surface of the blank, and
- decorating a cut surface by deformation by action of pressure and heat, characterised in that
one side of the cut foamed plastic blank is stamped briefly over its entire surface, i.e. the entire side of the blank facing the punch, so as to be shaped, optionally leaving out edge regions, by a flat punch (1) heated to at least 125°C and provided with a relief for producing the decoration, or in the case of profiled strips by a punch following the contours of the strip profile, the relief surface of the punch being provided with an adhesion-reducing coating, preferably of PTFE, and/or a parting compound before stamping.

2. A method according to claim 1, characterised in that the surface pressure exerted by the flat punch is between 1000 and 2500 Pa.

3. A method according to any of the preceding claims, characterised in that the duration of stamping is between 0.3 and 10 seconds.

4. A method according to any of the preceding claims, characterised in that the temperature of the flat punch surface in contact with the panel blank is between 125° and 200°C.

5. A method according to any of the preceding claims, characterised in that the depth of penetration of the flat punch is limited by an abutment.

6. A method according to any of the preceding claims, characterised in that after the (decorated) front side has been shaped, the back of the profiled strip or panel is stamped over its entire surface by a punch, either flat or with relief, or the blank is simultaneously stamped on both main surfaces.

7. A method according to any of the preceding claims, characterised in that after the (decorated) front side has been shaped, the decorated panel runs under pressure through a pair of rollers, resulting in stretch creases, cracks and/or notches on the decorated surface which relieve the strain thereof.

8. A method according to any of the preceding claims, characterised in that the material used is foamed polystyrene plastic having a specific density of 0.015 to 0.020.

9. A method according to any of the preceding claims, characterised in that the parting compound is sprayed on to the (unstamped) surface of the n^{th} panel blank (n = 5 to 12) and spreads from there to the relief-bearing surface of the punch.

10. A method according to any of the preceding claims, characterised in that the surface of the panel blank for stamping is sprinkled like a starry sky with pulverulent, flaky or granular material before the stamping operation.

11. A method according to claim 10, characterised in that during the stamping operation the sprinkled material is bonded by partial melting to the material of the surface of the panel blank.

12. A device for working the method of manufacturing decorative panels from flat blanks having a visible cut surface according to claim 1, characterised by
- a holder (11) of a stack of blanks, from which the flat blanks can be individually taken,
- a spray chamber (13) comprising a spray head (14) directed towards the blanks for spraying a parting compound (15),
- a press platen (18) on to which at least one flat blank can be laid flat and secured, and
- a heatable punch (10) for stamping the blank laid on the platen.

13. A device for working the method of manufacturing decorative panels from profiled blanks having a visible cut surface according to claim 1, characterised by:
- a store from which the profiled parts can be taken,
- a spray chamber comprising a spray head directed towards the blanks for spraying a parting compound,
- a press platen on to which at least one profiled blank can be secured, and
- a heatable punch having a contoured or flat punching surface.

14. A device according to claim 10 or 11, characterised in that the blanks can be secured on the platen by negative-pressure bores formed in the bedplate of the punch.

15. A device according to any of claims 12 to 14, characterised in that the end of the platen is definable by a vertically liftable abutment (20).

16. A device according to any of the preceding claims 12 to 15, characterised in that the platen comprises a heating plate and a punch plate heatable thereby, and thermocouples (8) for measuring the temperature are inserted into the top surface of the punch plate facing the heating plate.

17. A device according to any of the preceding claims 12 to 16, characterised in that a pair of rollers (24) are disposed downstream of the press (17).

18. A panel manufactured according to any of the preceding claims.

19. A panel according to claim 18, characterised in that after the stamping operation it has a thickness of 3 - 19 mm.

20. A profiled strip manufactured according to any of the preceding claims.

## Revendications

1. Procédé de fabrication d'articles décoratifs, à savoir de plaques et de baguettes profilées, en polystyrène cellulaire, comprenant les étapes opératoires suivantes :
- fabrication, dans un moule, d'un bloc à partir de perles de polystyrène expansées adhérant les unes aux autres, à l'aide d'un agent de gonflement et à une température supérieure à la température de ramollissement du polystyrène,
- après le refroidissement du bloc, découpage de différentes ébauches en forme de baguette ou de plaque avec coupe visible des perles de polystyrène se trouvant sur la surface de coupe de l'ébauche,
- décoration d'une surface de coupe par formage à chaud et par compression,
caractérisé par le fait que
les ébauches en mousse découpées sont comprimées sur l'un de leurs côtés, avec un poinçon plat (1) porté à une température d'au moins 125°C et pourvu d'un relief produisant le décor, dans le cas de baguettes profilées également au moyen d'un poinçon suivant les contours du profilé en forme de baguette, pendant une courte durée et sur toute la surface, c'est-à-dire en formant tout le côté de l'ébauche exposé au poinçon, éventuellement en omettant des zones situées au bord, la face en relief du poinçon étant pourvue d'un revêtement antiadhérant, de préférence en PTFE, et/ou étant dotée d'un agent de séparation avant la compression.

2. Procédé selon la revendication 1, caractérisé par le fait que la pression du poinçon plat est comprise entre 1000 et 2500 Pa.

3. Procédé selon l'une des revendications précédentes, caractérisé par le fait que la durée de compression est comprise entre 0,3 et 10 secondes.

4. Procédé selon l'une des revendications précédentes, caractérisé par le fait que la température de la surface du poinçon plat en contact avec l'ébauche de plaque est comprise entre 125 et 200 °C.

5. Procédé selon l'une des revendications précédentes, caractérisé par le fait que la profondeur de pénétration du poinçon plat est limitée par une butée.

6. Procédé selon l'une des revendications précédentes, caractérisé par le fait qu'après le formage du côté avant (décoré), on comprime également toute la surface du côté arrière de la baguette profilée ou de la plaque avec un poinçon plat ou pourvu d'un relief ou que l'ébauche est marquée simultanément sur deux faces principales.

7. Procédé selon l'une des revendications précédentes, caractérisé par le fait qu'après le formage du côté avant (décoré), la plaque décorative traverse sous pression une paire de cylindres, des plis de dilatation, des fissures et/ou des entailles apparaissant sur la face décorée et produisant un relâchement de ladite face décorée.

8. Procédé selon l'une des revendications précédentes, caractérisé par le fait que le matériau utilisé est du polystyrène cellulaire d'une densité spécifique de 0,015 à 0,020.

9. Procédé selon l'une des revendications précédentes, caractérisé par le fait que l'agent de séparation est appliqué par pulvérisation sur la face (non comprimée) de la n-ème ébauche de plaque (n = 5 à 12) et se répartit à partir de là sur la surface en relief du poinçon.

10. Procédé selon l'une des revendications précédentes, caractérisé par le fait qu'avant l'opération de compression, un matériau en poudre, en paillettes ou en granulés est répandu à la manière d'un ciel étoilé sur la face à comprimer de l'ébauche de plaque.

11. Procédé selon la revendication 10, caractérisé par le fait que, lors de la compression, le matériau répandu se lie avec le matériau de la surface de l'ébauche de plaque en fondant partiellement.

12. Dispositif pour la mise en oeuvre du procédé de fabrication de plaques décoratives à partir d'ébauches en forme de plaque avec coupe visible selon la revendication 1, caractérisé par :
- un support de pile d'ébauches (11) d'où les ébauches en forme de plaque peuvent être prélevées individuellement,
- une chambre de pulvérisation (13) pourvue d'une tête de pulvérisation (14) dirigée sur les ébauches, pour la pulvérisation d'un agent de séparation (15),
- un plateau-support (18) sur lequel au moins une ébauche en forme de plaque peut être posée en étant fixée à plat, et
- un poinçon de compression (10) chauffant qui permet de comprimer l'ébauche reposant sur le plateau-support.

13. Dispositif pour la mise en oeuvre du procédé de fabrication de profilés décoratifs à partir d'ébauches profilées avec coupe visible, selon la revendication 1, caractérisé par :
- une réserve dans laquelle les pièces profilées peuvent être prélevées,
- une chambre de pulvérisation pourvue d'une tête de pulvérisation dirigée sur les ébauches pour la pulvérisation d'un agent de séparation,
- un plateau-support sur lequel au moins une ébauche en forme de profilé peut être fixée, et
- un poinçon de compression chauffant qui possède une surface profilée ou plane.

14. Dispositif selon la revendication 10 ou 11, caractérisé par le fait que les ébauches peuvent être fixées sur le plateau-support à l'aide de perçages à vide qui sont ménagés dans le plateau-support du poinçon.

15. Dispositif selon l'une des revendications 12 à 14, caractérisé par le fait que l'extrémité du plateau-support peut être définie par une butée (20) pouvant être soulevée verticalement.

16. Dispositif selon l'une des revendications 12 à 15 précédentes, caractérisé par le fait que la plaque de poinçon se compose d'une plaque chauffante et d'une plaque de compression pouvant être chauffée par cette dernière et que des thermocouples (8) destinés à mesurer la température sont insérés dans le côté supérieur de la plaque de compression tourné vers la plaque chauffante.

17. Dispositif selon l'une des revendications 12 à 16 précédentes, caractérisé par le fait qu'une paire de cylindres (24) est montée en aval du dispositif de compression (17).

18. Plaque fabriquée selon l'une des revendications précédentes.

19. Plaque selon la revendication 18, caractérisée par le fait qu'elle a une épaisseur de 3 à 19 mm après la compression.

20. Baguette profilée fabriquée selon l'une des revendications précédentes.
